# DEMANDE DE BREVET EUROPEEN

(11) **EP 1 455 147 A2**
(43) Date de publication de la demande: **08.09.2004**
(21) Numéro de dépôt: 04290591.9
(22) Date de dépôt: 04.03.2004
(51) Int. Cl.: F24J 2/20, F24J 2/46

(54) **Capteur solaire pour chauffe-eau**

(30) Priorité: 06.03.2003 FR 0302740
(71) Demandeur: Nocera, Pierre-Jean, 20090 Ajaccio, Corso (FR)
(72) Inventeur: Nocera, Pierre-Jean, 20090 Ajaccio, Corso (FR)
(74) Mandataire: Dossmann, Gérard

(57) **Abrégé**

Capteur solaire pour chauffe-eau du type comprenant un échangeur de chaleur réalisé en une matière synthétique moulée, présentant une pluralité de passages 7 à l'intérieur desquels peut circuler un fluide caloporteur et une plaque de couverture translucide 17 fixée sur l'échangeur avec un écartement, caractérisé par le fait l'échangeur de chaleur constitue l'armature de support du capteur et se compose de deux demi-coques identiques 1a, 1b munies de nervures centrales longitudinales parallèlles en saillie 2a, 2b et d'une nervure de bordure en saillie 4a, 4b de dimension plus importante qu'une nervure centrale, les deux demi-coques étant collées ou thermosoudées de façon que les nervures centrales définissent les passages 7 précités et que les nervures de bordure respectives 4a, 4b définissent un cadre de bordure creux étanche rempli d'air isolant confiné sur la périphérie de l'échangeur.

## Description

La présente invention a pour objet un capteur solaire pour chauffe-eau destiné à équiper un système de production d'eau chaude sanitaire ou de chauffage, le capteur étant capable de récupérer l'énergie solaire et de la transmettre à un fluide caloporteur qui peut être l'eau destinée à être utilisée ou un autre fluide.

On connaît déjà des capteurs solaires de ce type, généralement réalisés en un matériau métallique pouvant comporter par exemple un dispositif absorbeur constitué d'un tube en cuivre portant une pluralité d'ailettes en aluminium pour augmenter la surface d'échange. Le tube, qui joue le rôle d'un échangeur de chaleur, est généralement monté dans un boîtier-support laissant un espace jouant un rôle de lame d'air entre le tube, échangeur de chaleur, muni de ses ailettes, et une plaque de couverture translucide laissant passer les rayons du soleil et augmentant la température de la lame d'air au contact du tube échangeur de chaleur par effet de serre.

Les capteurs de ce type présentent un certain nombre d'inconvénients, en raison de leur structure principalement métallique. En effet, la fabrication de ces dispositifs est rendue complexe par les problèmes d'assemblage et de soudure. Le poids de l'ensemble est élevé, ce qui entraîne des contraintes pour l'installation de ces capteurs, par exemple sur les toitures des bâtiments. De plus, l'épaisseur hors tout de ce type de capteurs est relativement importante (de 10 à 20 cm), en raison de la nécessité de laisser subsister un vide d'air de chaque côté du tube à ailettes, échangeur de chaleur.

On connaît également des capteurs solaires réalisés en matériaux synthétiques. C'est ainsi que la demande de brevet français 2 787 868, décrit un capteur solaire de structure entièrement moulée en matière synthétique composite, beaucoup plus léger qu'un capteur classique réalisé en métal, plus mince et résistant mieux aux intempéries. Ce capteur solaire comprend cependant, non seulement un dispositif échangeur de chaleur constitué d'au moins une plaque nervurée réalisée en une matière synthétique composite moulée, mais également un boîtier-support à l'intérieur duquel est monté le dispositif échangeur de chaleur. Il en résulte une certaine complexité de fabrication et de montage des différentes pièces.

Le brevet US 4 397 305 décrit un capteur solaire comportant un collecteur d'énergie solaire définissant un cadre creux et une pluralité de passages pour le fluide caloporteur, l'ensemble étant réalisé par moulage par centrifugation ou thermosoufflage, en une seule pièce, sans soudure ni collage. Il est en outre précisé dans ce document, qu'il est essentiel de faire communiquer le cadre creux avec l'atmosphère extérieure, de façon à créer une circulation d'air de refroidissement dans le cadre creux et la lame d'air qui se trouve au-dessus des passages du collecteur, de façon à maintenir la température de l'air à un niveau acceptable inférieur à environ 104°C.

Une telle réalisation entraîne des difficultés de fabrication, susceptibles de rendre son coût prohibitif. De plus, la nécessaire circulation d'air dans les volumes creux du capteur entraîne une baisse de rendement notable.

La présente invention a pour objet d'éliminer les inconvénients des dispositifs connus et de fournir un capteur solaire qui soit particulièrement simple à fabriquer et dont le rendement soit en outre particulièrement important.

L'invention a également pour objet un capteur solaire, de très faible épaisseur et de très faible poids, qui puisse donc être aisément installé, par exemple sur la toiture des bâtiments.

Le capteur solaire pour chauffe-eau de l'invention est du type comprenant un échangeur de chaleur réalisé en une matière synthétique moulée, présentant une pluralité de passages à l'intérieur desquels peut circuler un fluide caloporteur et une plaque de couverture translucide fixée sur l'échangeur avec un écartement. L'échangeur de chaleur constitue l'armature de support du capteur à l'exclusion de toute pièce supplémentaire.

L'échangeur se compose de deux demi-coques identiques munies de nervures centrales longitudinales parallèlles en saillie et d'une nervure de bordure en saillie de dimension plus importante qu'une nervure centrale. Les deux demi-coques sont collées ou thermosoudées entre elles de façon que les nervures centrales définissent les passages pour le fluide caloporteur et que les nervures de bordure respectives définissent un cadre de bordure creux étanche rempli d'air isolant confiné sur la périphérie de l'échangeur.

Il est ainsi possible de fabriquer le capteur solaire rapidement et à moindre coût et d'obtenir un excellent rendement calorifique. En effet, les demi-coques étant identiques peuvent être fabriquées à l'aide du même moule, de préférence à partir d'un tissu à base de fibres de carbone ou de verre, préimprégné avec une résine synthétique. Le moulage peut se faire à la presse par formage dans un moule.

L'air isolant est enfermé à l'intérieur du cadre de bordure creux au moment du moulage. L'isolation réalisée par l'air confiné à l'intérieur du cadre de bordure qui entoure la zone d'échange thermique sur toute sa périphérie est une caractéristique importante car elle permet une augmentation notable du rendement de l'échange thermique.

Les nervures longitudinales en saillie permettent l'obtention de passages de fluide caloporteur ayant de préférence une épaisseur comprise entre 5 et 10 mm, idéalement de 8 mm de façon à réduire les pertes de charge tout en augmentant le rendement du transfert de chaleur.

En fonctionnement, la température du fluide caloporteur est généralement comprise entre 30°C et 90°C, plus particulièrement environ 80°C, même si la température de l'air à l'intérieur du capteur peut être largement supérieure.

De préférence, les deux demi-coques comprennent également deux nervures transversales en saillie de même dimension qu'une des nervures longitudinales et définissant sur deux côtés de l'échangeur, deux canaux collecteurs en communication avec les extrémités des passages précités.

Au moins deux canules rapportées sont avantageusement prévues pour l'entrée et la sortie du fluide caloporteur, les canules traversant de manière étanche le cadre de bordure creux et débouchant dans les canaux collecteurs.

Chaque canule peut être équipée d'un écrou captif fileté pour le raccordement avec la canalisation d'utilisation du fluide caloporteur, qui peut être de l'eau.

La plaque de couverture est collée ou thermosoudée sur le cadre de bordure creux pour définir la face supérieure du capteur.

Une matière isolante est de préférence disposée sur la face inférieure du capteur.

La matière isolante est avantageusement délimitée par le cadre de bordure creux et présente une épaisseur telle qu'elle ne fasse sensiblement pas saillie par rapport au dit cadre de bordure.

Un chauffe-eau solaire selon l'invention peut comprendre un seul capteur solaire ou au moins deux capteurs tels que précédemment décrits, connectés entre eux en série.

L'invention sera mieux comprise à l'étude d'un mode de réalisation particulier, décrit à titre d'exemple nullement limitatif et illustré par les dessins annexés, sur lesquels :
- la figure 1 est une vue de dessus d'une demi-coque servant à la fabrication d'un capteur solaire selon l'invention ;
- la figure 2 est une vue agrandie partielle du coin supérieur droit de la demi-coque visible sur la figure 1 ;
- la figure 3 est une vue en coupe selon III-III de la figure 2 ;
- la figure 4 est une vue partielle en coupe analogue à la figure 3, montrant cependant l'ensemble des éléments assemblés constituant le capteur solaire complet ;
- la figure 5 est une vue partielle en coupe selon V-V de la figure 1 ;
- la figure 6 est une vue partielle en coupe similaire à la figure 5, montrant l'ensemble des éléments assemblés formant le capteur complet ;
- la figure 7 est une vue partielle en coupe analogue à la figure 6, montrant également en coupe la zone de la canule ; et
- la figure 8 est une vue extérieure en élévation d'un chauffe-eau solaire équipé de deux capteurs solaires selon l'invention, montés en série.

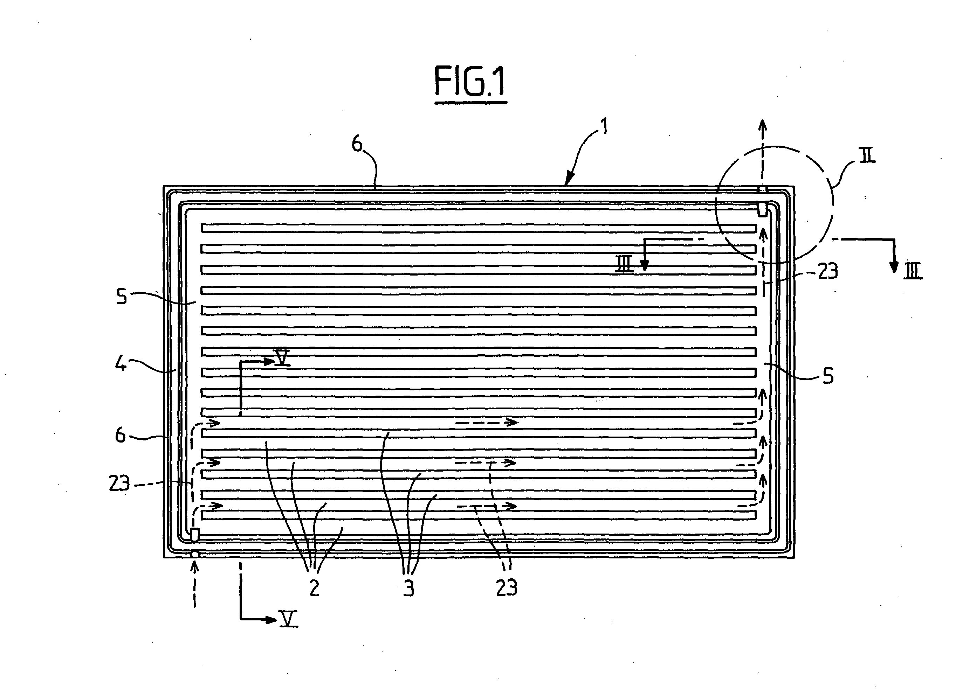

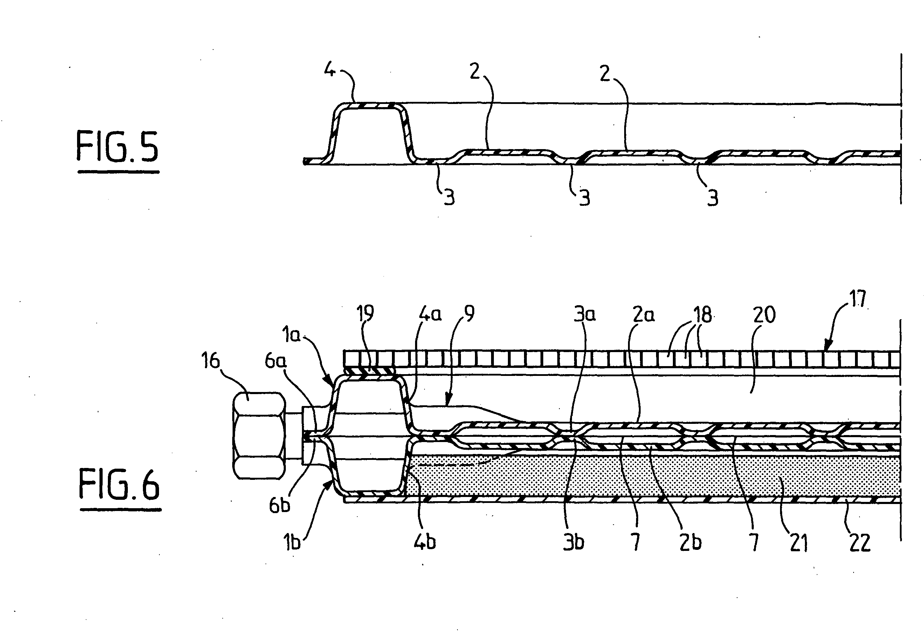

Telle qu'elle est illustrée sur la figure 1, une demi-coque 1 présente une forme générale rectangulaire. Dans la partie centrale, sont pratiquées une pluralité de nervures longitudinales parallèles 2, en saillie par rapport à des zones 3 situées entre les différentes nervures 2. Les nervures 2 constituent, après assemblage de demi-coques identiques, comme on le verra plus loin, des passages pour un fluide caloporteur. Une nervure en saillie 4 est disposée sur toute la périphérie de la demi-coque 1, et constitue une bordure pour cette dernière. La dimension en saillie de la nervure de bordure 4 est nettement plus importante que la dimension en saillie des nervures longitudinales 2, comme on peut le voir en particulier sur la vue en coupe de la figure 5. Dans l'exemple illustré, la dimension en saillie de la nervure de bordure 4 est à peu près quatre fois plus importante que la dimension en saillie des nervures longitudinales 2.

Dans le sens transversal, c'est-à-dire perpendiculairement aux nervures longitudinales 2, il apparaît sur la figure 5 que la dimension transversale des nervures 2 est plus importante que la dimension transversale des zones de contact 3.

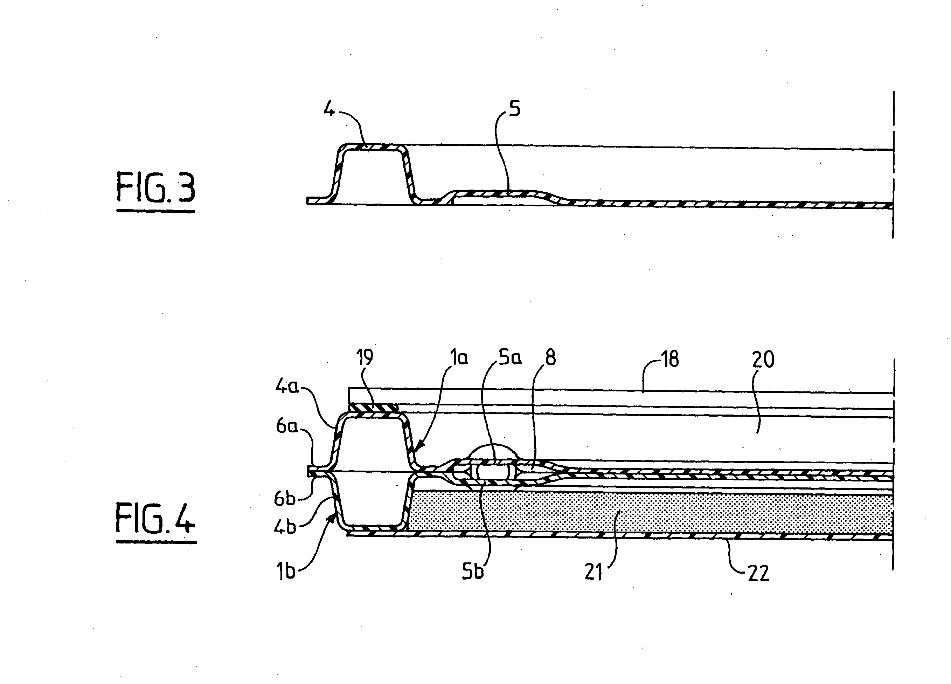

La demi-coque 1 comprend également, au voisinage de ses bords transversaux et à l'intérieur par rapport à la nervure de bordure 4, deux nervures transversales 5 en saillie, présentant les mêmes dimensions en saillie que les nervures longitudinales 2. L'une de ces nervures transversales 5 est visible sur la vue en coupe de la figure 3.

La demi-coque 1 peut être réalisée par moulage d'un matériau synthétique, de préférence chargé avec un matériau particulaire absorbant la chaleur, tel que du noir de carbone ou de filaments comêlés de verre, noyés dans une résine synthétique. Il est également possible d'utiliser un matériau tissé en fibres de carbone, qui est ensuite imprégné d'une résine synthétique, puis introduit dans une presse de formage. La fabrication de la demi-coque 1 peut se faire d'une manière automatique et à grande vitesse. La demi-coque ainsi obtenue présente un encombrement total en épaisseur de 20 à 35 mm, avec des parois ayant une épaisseur de 2 à 3 mm. Elle constitue ainsi un élément particulièrement léger.

Pour réaliser le capteur solaire de l'invention, visible en particulier en coupe sur les figures 4 et 6, on utilise deux demi-coques identiques, telles que la demi-coque 1 visible sur la figure 1. Ces deux demi-coques identiques, référencées la et 1b sur les figures 4 et 6, sont fixées l'une à l'autre par collage ou thermosoudage le long des zones de contact constituées par les zones planes longitudinales 3 se trouvant entre les nervures centrales longitudinales parallèles 2.

Les deux nervures de bordure respectives 4a et 4b des demi-coques identiques 1a et 1b forment un cadre étanche rempli d'air isolant confiné à la fabrication et disposé à la périphérie du capteur. A cet effet, les bords extrêmes plans 6a, 6b des demi-coques 1a, 1b sont également collés ou thermosoudés sur toute la périphérie du cadre de bordure constitué par les nervures de bordure 4a, 4b.

De cette manière, se trouvent définis par les nervures longitudinales correspondantes 2a et 2b des deux demi-coques 1a et 1b, des passages 7 longitudinaux pour le fluide caloporteur, ces passages étant étanches sur la majeure partie de la longueur du capteur. A chacune de leur extrémité, ces passages 7 débouchent directement dans des canaux collecteurs, tels que le canal 8 visible sur la figure 4, qui sont définis par les nervures transversales 5a et 5b des deux demi-coques 1a, 1b.

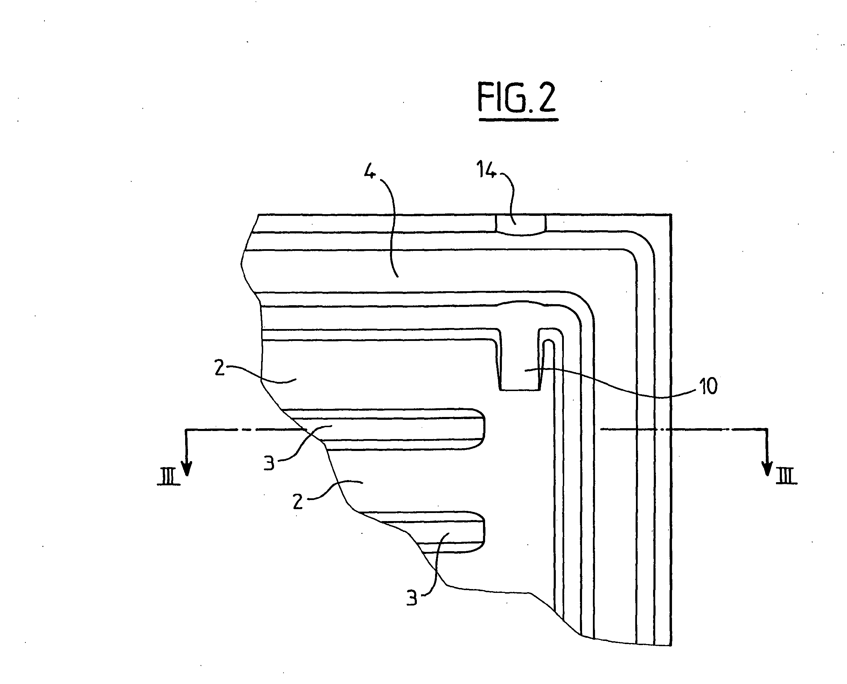

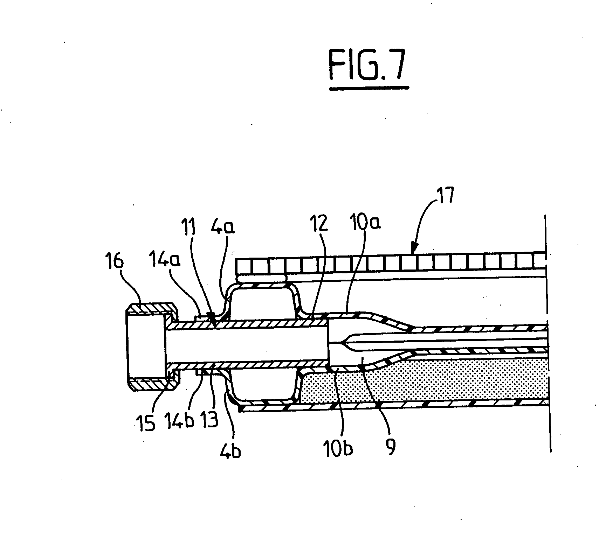

Chacun des canaux collecteurs 8 débouche à ses deux extrémités dans un embout 9 formé par une zone en saillie 10a, 10b pratiquée sur chacune des demi-coques 1 au voisinage d'au moins deux angles de sa forme rectangulaire, comme on peut le voir en particulier sur la figure 2. L'embout 9 visible en coupe sur la figure 7 est formé par les portions en saillie respectives 10a et 10b des deux demi-coques identiques 1a et 1b. Une canule cylindrique 11 peut ainsi être rapportée lors de la fabrication à l'endroit de l'embout 9 entre les deux demi-coques 1a et 1b, en étant fixée à celles-ci par collage ou thermosoudage selon la matière constitutive de ladite canule 11. L'extrémité interne 12 de la canule 11 vient pénétrer à l'intérieur de l'embout 9 et se trouve fixée de manière étanche aux parois 10a, 10b de celui-ci. Du côté extérieur, une partie 13 de la canule 11 est fixée sur un bord en saillie 14a, 14b de chacune des demi-coques 1a, 1b. La figure 2 montre en particulier la forme en saillie de cette portion 14.

L'extrémité externe de la canule 11 présente une collerette 15 qui permet le maintien captif d'un écrou fileté 16 servant au raccordement avec une canalisation d'utilisation du fluide caloporteur. Grâce à la fixation par collage ou thermosoudage de la canule 11, celle-ci peut traverser de manière étanche le cadre de bordure creux défini par les nervures 4a, 4b, comme cela est illustré sur la figure 7.

Le capteur solaire comprend non seulement l'échangeur de chaleur constitué, ainsi qu'il a été dit plus haut, par l'association des deux demi-coques 1a et 1b identiques, mais également une plaque de couverture translucide 17 visible sur les figures 4 et 6 ayant sensiblement les mêmes dimensions qu'une des demi-coques 1. Dans l'exemple illustré, la plaque 17 est réalisée en matière synthétique translucide et comprend une multitude de canaux parallèles 18 visibles en coupe sur la figure 6. La plaque 17 est fixée par exemple par collage au moyen d'un cordon de colle 19 sur tout le pourtour de la nervure de bordure 4a de la demi-coque 1a. Compte tenu de l'épaisseur en saillie de la bordure 4a, qui est plus importante que l'épaisseur en saillie des nervures longitudinales 2a, une lame d'air 20 se trouve ainsi définie entre la plaque de couverture 17 et la surface extérieure des nervures longitudinales 2a qui délimitent les passages 17 pour le fluide caloporteur.

Sur la face inférieure du capteur, à l'opposé de la face supérieure qui reçoit la plaque de couverture 17, se trouve disposée une couche 21 d'une matière isolante qui vient occuper l'espace délimité par le cadre de bordure de la nervure de bordure 4b, comme on le voit sur les figures 4 et 6. L'épaisseur de la couche isolante 21 est telle qu'elle ne dépasse pas de la saillie de la nervure de bordure 4b. La couche isolante 21 peut être maintenue au moyen d'une plaque de fermeture inférieure 22 collée sur la surface inférieure de la nervure de bordure 4b. Dans l'exemple illustré, la couche de matière isolante 21 n'entre pas en contact avec la surface inférieure des nervures longitudinales 2b. Dans un autre mode de réalisation, il serait possible de remplir complètement l'espace inférieur du capteur, le matériau isolant se trouvant alors en contact avec la surface inférieure des nervures longitudinales 2b.

Un capteur solaire constitué ainsi que cela est représenté partiellement en coupe sur les figures 4 et 6, présente l'avantage d'une fabrication particulièrement simple comme il a été indiqué précédemment, d'une grande légèreté et d'une épaisseur particulièrement réduite.

Le volume d'air confiné à l'intérieur du cadre de bordure défini par les nervures 4a, 4b, est une caractéristique importante de l'invention permettant d'augmenter la température de l'air dans la lame d'air 20, et donc le rendement thermique du capteur solaire. L'étanchéité du volume défini à l'intérieur des deux nervures de bordure 4a, 4b, est assurée par le collage ou le thermosoudage des deux demi-coques 1a, 1b, ainsi que par la structure particulière illustrée sur la figure 7, qui permet le passage étanche des canules 11 à travers l'espace clos du cadre de bordure.

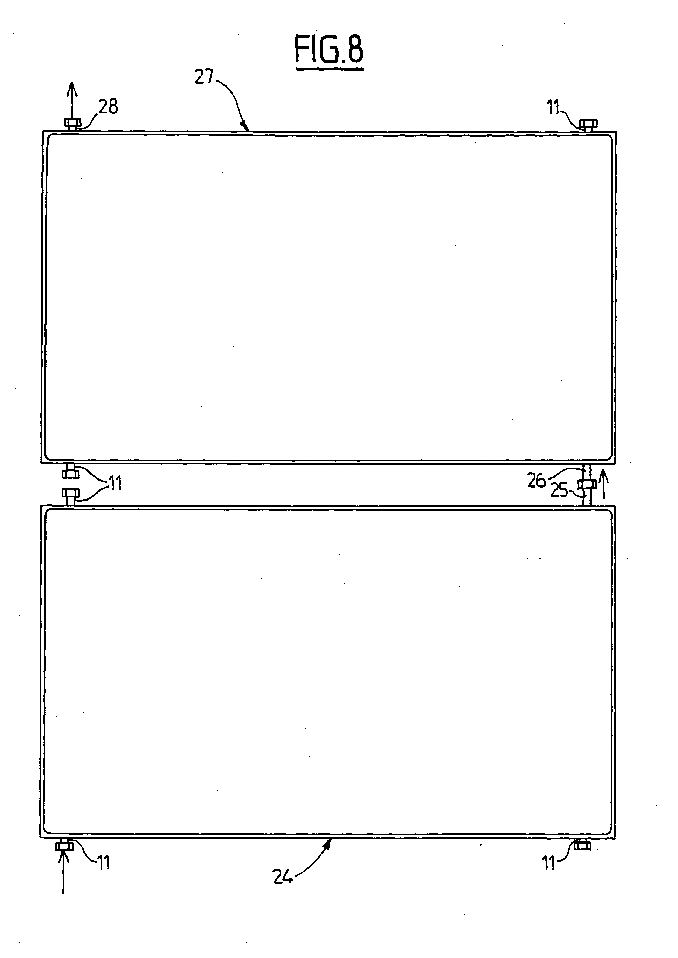

Sur la figure 1, deux canules sont prévues aux angles diagonalement opposés. Dans un autre mode de réalisation visible sur la figure 8, quatre canules 11 du même type peuvent être disposées respectivement à chacun des angles du capteur. L'une de ces canules est avantageusement utilisée comme entrée pour le fluide caloporteur, tandis qu'une autre canule située dans l'angle diagonalement opposé, peut servir de sortie pour le fluide caloporteur. La circulation du fluide caloporteur se fait alors comme schématisé par les flèches 23 sur la figure 1. Les autres canules, qui ne sont pas utilisées pour la circulation du fluide caloporteur, sont, soit obturées par un bouchon fileté, soit servent pour purger l'air éventuellement contenu dans les passages pour le fluide caloporteur.

On peut également multiplier la quantité de chaleur fournie en utilisant plusieurs capteurs solaires selon l'invention, montés en série, comme cela est illustré sur la figure 1. Un premier capteur 24 est connecté par sa sortie 25 à l'entrée 26 d'un deuxième capteur 27, dont la sortie se trouve dans l'angle diagonalement opposé 28.

A titre d'exemple, pour le matériau synthétique que l'on peut avantageusement utiliser pour la réalisation des deux demi-coques de l'échangeur de chaleur équipant le capteur solaire selon l'invention, on peut citer les matériaux suivants : polycarbonate injecté, polycarbonate copolymère, polyphénylène-éther (PPE), polyméthacrylate de méthyle (PMMA), polysulfures de phénylène (PPS), polyétherimide (PEI) ou un assemblage et un complexe de matériaux synthétiques, contenant des fibres de carbone ou de verre.

En ce qui concerne la plaque de couverture translucide, on pourra utiliser du verre ou du polycarbonate.

Le capteur solaire, selon l'invention, peut être associé, comme les capteurs classiques, à une boucle de régulation et à un ballon ou une cuve de stockage pour emmagasiner l'eau chaude ainsi produite. Le ballon de stockage peut être muni d'un échangeur et d'une résistance électrique, en fonction des applications.

## Revendications

1. Capteur solaire pour chauffe-eau du type comprenant un échangeur de chaleur réalisé en une matière synthétique moulée, présentant une pluralité de passages (7) à l'intérieur desquels peut circuler un fluide caloporteur et une plaque de couverture translucide (17) fixée sur l'échangeur avec un écartement, **caractérisé par** le fait l'échangeur de chaleur constitue l'armature de support du capteur et se compose de deux demi-coques identiques (1a, 1b) munies de nervures centrales longitudinales parallèlles en saillie (2) et d'une nervure de bordure en saillie (4) de dimension plus importante qu'une nervure centrale, les deux demi-coques étant collées ou thermosoudées de façon que les nervures centrales définissent les passages (7) précités et que les nervures de bordure respectives (4a, 4b) définissent un cadre de bordure creux étanche rempli d'air isolant confiné sur la périphérie de l'échangeur.

2. Capteur solaire selon la revendication 1, **caractérisé par le fait que** les deux demi-coques (1a, 1b) comprennent également deux nervures transversales en saillie (5) de même dimension qu'une nervure longitudinale (2) et définissant sur deux côtés de l'échangeur, deux canaux collecteurs (8) en communication avec les extrémités des passages (7) précités.

3. Capteur solaire selon la revendication 2, **caractérisé par le fait qu'**il comprend au moins deux canules rapportées (11) pour l'entrée et la sortie du fluide caloporteur, les canules traversant de manière étanche le cadre de bordure creux et débouchant dans les canaux collecteurs (8).

4. Capteur solaire selon la revendication 3, **caractérisé par le fait que** chaque canule (11) est équipée d'un écrou captif fileté (16) de raccordement.

5. Capteur solaire selon l'une quelconque des revendications précédentes, **caractérisé par le fait que** la plaque de couverture (17) est collée ou thermosoudée sur le cadre de bordure creux pour définir la face supérieure du capteur.

6. Capteur solaire selon l'une quelconque des revendications précédentes, **caractérisé par le fait qu'**une matière isolante (21) est disposée sur la face inférieure du capteur.

7. Capteur solaire selon la revendication 6, **caractérisé par le fait que** la matière isolante (21) est délimitée par le cadre de bordure creux et présente une épaisseur telle qu'elle ne fasse sensiblement pas saillie par rapport au dit cadre de bordure.

8. Chauffe-eau solaire, **caractérisé par le fait qu'**il comprend un ou plusieurs capteurs, tels que définis dans l'une quelconque des revendications précédentes, connectés entre eux en série.
